# EUROPEAN PATENT APPLICATION

(11) **EP 4 618 602 A1**
(43) Date of publication of application: **17.09.2025**
(21) Application number: 23909799.1
(22) Date of filing: 22.11.2023
(51) Int. Cl.: H04W 4/80, H04W 48/10, H04W 76/10, H04W 76/14, H04W 76/15, H04W 76/16, H04W 76/18, H04W 76/19, H04W 76/30, G07C 9/00

(54) **BLUETOOTH CONNECTION METHOD AND COMMUNICATION SYSTEM**

(30) Priority: 30.12.2022 CN 202211724968
(71) Applicant: Huawei Technologies Co., Ltd., Shenzhen, Guangdong 518129 (CN)
(72) Inventor: HAO, Sen, Shenzhen, Guangdong 518129 (CN); ZHOU, Erhu, Shenzhen, Guangdong 518129 (CN)
(74) Representative: Goddar, Heinz J.
(86) International application number: PCT/CN2023/133293
(87) International publication number: WO 2024/139867

(57) **Abstract**

This application provides a Bluetooth connection method and a communication system. A BLE communication connection between a terminal device and a network device may be disconnected based on a set condition, so that the terminal device can establish a new BLE communication connection to another network device or another terminal device. The terminal device may further send a broadcast message to indicate whether the current terminal device is capable of being connected, and another device that receives the broadcast message from the terminal device may determine, based on the broadcast message, whether to establish a connection to the terminal device. According to the technical solutions provided in this application, a manner in which the terminal device disconnects the BLE communication connection and a structure of a Bluetooth broadcast sent by the terminal device are improved, so that the terminal device can implement, through a one-to-one BLE connection, a communication function of the terminal device in a mesh network connection, thereby reducing complexity of BLE communication of the terminal device and saving resources of the terminal device.

## Description

This application claims priority to Chinese Patent Application No. 202211724968.X, filed with the China National Intellectual Property Administration on December 30, 2022 and entitled "BLUETOOTH CONNECTION METHOD AND COMMUNICATION SYSTEM", which is incorporated herein by reference in its entirety.

### TECHNICAL FIELD

This application relates to the field of terminal devices, and specifically, to a Bluetooth connection method and a communication system.

### BACKGROUND

An electronic device that supports Bluetooth low energy (Bluetooth low energy, BLE) communication may be one-to-one connected to one device, or may be one-to-many connected to a plurality of devices. For an electronic device with a high security level (for example, a door lock), if the electronic device is connected in a one-to-many mode, the electronic device needs to negotiate different communication keys for connections, and encrypt and transmit a packet, to meet a communication security requirement. In addition, the electronic device further needs to distinguish a device from which a received instruction comes, to return a result to the corresponding device.

Compared with a one-to-one Bluetooth connection mode, a one-to-many Bluetooth connection mode occupies a larger quantity of resources in a Bluetooth communication process, and the communication process is complex. Therefore, it may be considered to implement a function in the one-to-many connection mode by using the one-to-one Bluetooth connection mode.

### SUMMARY

This application provides a Bluetooth connection method and a communication system. A network device may disconnect a BLE connection from a terminal device when the network device cannot access a server or receives indication information from another terminal device. After the disconnection, the terminal device may establish a BLE connection to another network device, and a new link is used to transmit data to the server. The terminal device may establish a BLE connection to only one device at a time, thereby reducing complexity of BLE communication of the terminal device and saving resources of the terminal device.

According to a first aspect, a Bluetooth connection method is provided, including: A first network device sends a disconnection request message to a first terminal device when the first network device cannot access a server through a first link or when the first network device receives indication information sent by a second terminal device, where the disconnection request message is used to request to disconnect a Bluetooth low energy BLE communication connection between the first network device and the first terminal device, the first link is used to transmit information for the first terminal device to the server, the second terminal device is configured to control the first terminal device, and the indication information indicates to disconnect the BLE communication connection between the first network device and the first terminal device; a second network device establishes a BLE communication connection to the first terminal device; and the second network device transmits information for the first terminal device to the server through a second link.

In this technical solution, when the first network device cannot access the server, the first network device cannot provide a data transmission channel for the first terminal device, and the first network device actively disconnects the BLE connection from the first terminal device. In this way, the first terminal device can establish the BLE connection to the second network device. Therefore, the first terminal device can transmit information through a data transmission channel provided by the second network device.

When receiving the indication information from the second terminal device, the first network device actively disconnects the BLE connection from the first terminal device. In this way, the second terminal device may establish a BLE connection to the first terminal device, to further control the first terminal device. Compared with a method for implementing network node handover over a mesh network, in this technical solution, the first terminal device establishes a BLE connection to only one device at a time. Implementing this technical solution helps reduce complexity of the BLE connection of the first terminal device and helps save resources of the first terminal device.

With reference to the first aspect, in some implementations of the first aspect, before the second network device establishes the BLE communication connection to the first terminal device, the first terminal device sends a first Bluetooth broadcast, where the first Bluetooth broadcast indicates that the second network device is capable of being connected to the first terminal device; and the second network device receives the first Bluetooth broadcast.

That the first Bluetooth broadcast indicates that the second network device is capable of being connected to the first terminal device may also be understood as that another network device is capable of being connected to the first terminal device. In some cases, it may also be understood as that a network device that can access the server is capable of being connected to the first terminal device. Herein, the network device that can access the server also includes the first network device of which the first link is restored.

For a device that has been paired with the first terminal device, "capable of being connected" may also be referred to as "capable of being reconnected".

In this technical solution, after disconnecting the BLE connection from the first network device and before establishing the BLE connection to the second network device, the first terminal device may send the broadcast indicating that the first terminal device is capable of being connected. In this way, when receiving the first Bluetooth broadcast, the second terminal device can determine that the first terminal device is in an available state, and therefore can establish a connection to the first terminal device. This technical solution helps increase efficiency of establishing the BLE connection to the first terminal device by the second network device, and helps improve stability of BLE communication of the first terminal device.

With reference to the first aspect, in some implementations of the first aspect, the first terminal device sends a second Bluetooth broadcast when the second network device establishes the BLE communication connection to the first terminal device, where the second Bluetooth broadcast indicates that the first terminal device is incapable of being connected.

After the first terminal device establishes the BLE connection to the second network device, the first terminal device sends the broadcast indicating that the first terminal device is incapable of being connected. After receiving the Bluetooth broadcast, another device may determine that the first terminal device is incapable of being connected currently, and therefore does not send a BLE connection request message to the first terminal device. The first terminal device does not need to process the BLE connection request message sent by the another device. Implementing this technical solution helps save resources of the first terminal device and improve stability of the connection between the first terminal device and the second network device.

With reference to the first aspect, in some implementations of the first aspect, the first Bluetooth broadcast includes a target field.

In a possible implementation, the target field is a newly added field of the first Bluetooth broadcast. When the first Bluetooth broadcast includes the target field, the first Bluetooth broadcast indicates that the first terminal device is capable of being connected. When the first Bluetooth broadcast does not include the target field, the first Bluetooth broadcast indicates that the first terminal device is incapable of being connected.

In this technical solution, the target field is set in the first Bluetooth broadcast, and the target field indicates whether the first terminal device is in a connectable state. Implementing this technical solution helps improve applicability of the Bluetooth connection method provided in this application.

With reference to the first aspect, in some implementations of the first aspect, the first terminal device is a door lock, and both the first network device and the second network device are Bluetooth gateways.

In this technical solution, the first terminal device is the door lock, the door lock is a terminal device with a high security requirement, and communication between the door lock and a terminal device needs to be encrypted. Compared with a method using the mesh network, in this technical solution, the door lock establishes a BLE connection to only one device at a time, there is no need to identify an identity of the device and determine different encryption keys, so that BLE communication of the door lock is simplified, and resources of the door lock are saved.

According to a second aspect, a Bluetooth connection method is provided, including: A second terminal device sends a control message to a first terminal device, where the control message indicates to disconnect a Bluetooth low energy BLE communication connection of the first terminal device, and the second terminal device is configured to control the first terminal device; the first terminal device sends a disconnection request message to a first network device, where the disconnection request message is used to request to disconnect the BLE communication connection between the first terminal device and the first network device; and the second terminal device establishes a BLE communication connection to the first terminal device. The first network device is configured to transmit information for the first terminal device to a server through a first link.

In this technical solution, the second terminal device may send indication information to the first terminal device, so that the first terminal device disconnects the current BLE connection, and therefore can establish the BLE connection to the second terminal device. Compared with a method in which the first terminal device establishes the BLE connection to both the second terminal device and the first network device over the mesh network, this technical solution helps reduce complexity of the BLE connection of the first terminal device and helps save resources of the first terminal device.

With reference to the second aspect, in some implementations of the second aspect, before the second terminal device establishes the BLE communication connection to the first terminal device, the first terminal device sends a second Bluetooth broadcast, where the second Bluetooth broadcast indicates that the first network device is incapable of being connected to the first terminal device.

That the second Bluetooth broadcast indicates that the first network device is incapable of being connected to the first terminal device may also be understood as that a network device is incapable of being connected to the first terminal device. In addition, the control message is sent by the second terminal device, that the second Bluetooth broadcast indicates that the first network device is incapable of being connected to the first terminal device may also be understood as that a device other than the second terminal device cannot establish a BLE communication connection to the first terminal device.

In this technical solution, the first terminal device sends the second Bluetooth broadcast to indicate that the first terminal device is incapable of being connected currently, so that another device that receives the second Bluetooth broadcast does not request to establish a BLE connection to the first terminal device. In this way, after the first terminal device disconnects the BLE connection from the first network device, only the second terminal device is capable of being connected to the first terminal device. This helps increase a success rate of establishing the BLE connection between the first terminal device and the second terminal device.

With reference to the second aspect, in some implementations of the second aspect, the first terminal device sends the second Bluetooth broadcast within preset duration.

In this technical solution, the first terminal device sends the second Bluetooth broadcast within the preset duration, and all other devices consider, within the preset duration, that the first terminal device is in an unconnectable state, so that the second terminal device can establish the BLE connection to the first terminal device within the preset duration. Implementing this technical solution helps increase a success rate of establishing the BLE connection between the first terminal device and the second terminal device.

With reference to the second aspect, in some implementations of the second aspect, the second Bluetooth broadcast does not include a target field.

In a possible implementation, the target field is a newly added field of the second Bluetooth broadcast.

In a possible implementation, the Bluetooth broadcast includes an indication field. When a value of the indication field is a first value, the Bluetooth broadcast indicates that only the second terminal device is capable of being connected to the first terminal device. When a value of the indication field is a second value, the Bluetooth broadcast indicates that only the first network device is capable of being connected to the first terminal device. When a value of the indication field is a third value, the Bluetooth broadcast indicates that both the second terminal device and the first network device are capable of being connected to the first terminal device.

In this technical solution, the target field is set in the second Bluetooth broadcast, and the target field indicates whether the first terminal device is in a connectable state. Implementing this technical solution helps improve applicability of the Bluetooth connection method provided in this application.

With reference to the second aspect, in some implementations of the second aspect, before the second terminal device establishes the BLE communication connection to the first terminal device, the first terminal device sends a second Bluetooth broadcast, where the second Bluetooth broadcast includes an identifier field, and the identifier field indicates that the first terminal device is incapable of being connected; the second terminal device receives the second Bluetooth broadcast; and the second terminal device ignores the identifier field.

With reference to the second aspect, in some implementations of the second aspect, the first terminal device sends a first Bluetooth broadcast when the BLE communication connection between the first terminal device and the second terminal device is disconnected, where the first Bluetooth broadcast indicates that the first network device is capable of being connected to the first terminal device.

In this technical solution, after the second terminal device disconnects the BLE connection from the first terminal device, the first Bluetooth broadcast is sent, so that another device, for example, a network device can determine that the first terminal device is in the connectable state, and therefore can establish a BLE connection to the first terminal device. Implementing this technical solution helps increase a rate at which the first terminal device establishes the BLE with the network device after disconnecting the connection from the second terminal device, and increase efficiency of switching a connected device of the first terminal device in a BLE single-connection state.

With reference to the second aspect, in some implementations of the second aspect, the first terminal device is a door lock, the second terminal device is a mobile phone, and the first network device is a Bluetooth gateway.

In this technical solution, the first terminal device is the door lock, the door lock is a terminal device with a high security requirement, and communication between the door lock and a terminal device needs to be encrypted. Compared with a method using the mesh network, in this technical solution, the door lock establishes a BLE connection to only one device at a time, there is no need to identify an identity of the device and determine different encryption keys, so that BLE communication of the door lock is simplified, and resources of the door lock are saved.

For descriptions of technical explanations and beneficial effects in the following technical solutions, refer to the content in the first aspect and the second aspect. For brevity, details are not described below again.

According to a third aspect, a Bluetooth connection method is provided, including: A first network device determines, based on indication information and/or network status information, whether to disconnect a BLE communication connection from a first terminal device, where the indication information indicates to disconnect the BLE communication connection between the first network device and the first terminal device, and the network status information indicates whether the first network device can access a server; and when determining to disconnect the BLE communication connection from the first terminal device, the first network device sends a disconnection request message to the first terminal device. The first network device is configured to transmit information for the first terminal device to the server through a first link.

With reference to the third aspect, in some implementations of the third aspect, when the first network device disconnects the BLE communication connection from the first terminal device, the first network device determines, based on a network status and a Bluetooth broadcast, whether to send a connection request message to the first terminal device, where the Bluetooth broadcast indicates whether the first terminal device is capable of being connected, and the connection request message is used to request to establish a BLE communication connection to the first terminal device.

Specifically, the first network device sends the connection request message to the first terminal device when the network status indicates that the first link is connected and the Bluetooth broadcast indicates that the first terminal device is capable of being connected.

With reference to the third aspect, in some implementations of the third aspect, when the Bluetooth broadcast includes a target field, the Bluetooth broadcast indicates that the first terminal device is capable of being connected; or when the Bluetooth broadcast does not include a target field, the Bluetooth broadcast indicates that the first terminal device is incapable of being connected.

According to a fourth aspect, a Bluetooth connection method is provided, including: A second terminal device sends a control message to a first terminal device, where the control message indicates to disconnect a BLE communication connection of the first terminal device; and the second terminal device sends a connection request message to the first terminal device, where the connection request message is used to request to establish a BLE communication connection to the first terminal device.

With reference to the fourth aspect, in some implementations of the fourth aspect, the second terminal device sends an indication message to a first network device, where the indication message indicates to disconnect a BLE communication connection between the first network device and the first terminal device.

According to a fifth aspect, a Bluetooth connection method is provided, including: A first terminal device sends a first Bluetooth broadcast when a BLE communication connection between a first network device and the first terminal device is disconnected, where the first Bluetooth broadcast indicates that a second network device is capable of being connected to the first terminal device. The first terminal device receives a connection request message sent by the second network device, where the connection request message is used to request to establish a BLE communication connection to the first terminal device.

With reference to the fifth aspect, in some implementations of the fifth aspect, the first terminal device sends a second Bluetooth broadcast when the first terminal device establishes the BLE communication connection to the second network device, where the second Bluetooth broadcast indicates that the first terminal device is incapable of being connected.

With reference to the fifth aspect, in some implementations of the fifth aspect, the first Bluetooth broadcast includes a target field.

According to a sixth aspect, a Bluetooth connection method is provided, including: A first terminal device receives a control message, where the control message is used to request to disconnect a BLE communication connection of the first terminal device; and the first terminal device sends a disconnection request message, where the disconnection request message is used to request to disconnect the BLE communication connection from a first network device.

With reference to the sixth aspect, in some implementations of the sixth aspect, before a second terminal device establishes a BLE communication connection to the first terminal device, the first terminal device sends a second Bluetooth broadcast, where the second Bluetooth broadcast indicates that the first network device is incapable of being connected to the first terminal device.

With reference to the sixth aspect, in some implementations of the sixth aspect, the first terminal device sends a first Bluetooth broadcast when the BLE communication connection between the second terminal device and the first terminal device is disconnected, where the first Bluetooth broadcast indicates that the first network device is capable of being connected to the first terminal device.

With reference to the sixth aspect, in some implementations of the sixth aspect, the second Bluetooth broadcast does not include a target field, and the target field indicates that the first network device is capable of being connected to the first terminal device.

According to a seventh aspect, a communication system is provided, including a first network device, a second network device, and a first terminal device. The first network device is configured to perform a method performed by the first network device according to any one of the first aspect and the possible implementations of the first aspect. The second network device is configured to perform a method performed by the second network device according to any one of the first aspect and the possible implementations of the first aspect. The first terminal device is configured to perform a method performed by the first terminal device according to any one of the first aspect and the possible implementations of the first aspect.

According to an eighth aspect, a communication system is provided, including a first terminal device, a second terminal device, and a first network device. The second terminal device is configured to perform a method performed by the second terminal device according to any one of the second aspect and the possible implementations of the second aspect. The first terminal device is configured to perform a method performed by the first terminal device according to any one of the second aspect and the possible implementations of the second aspect. The first network device is configured to perform a method performed by the first network device according to any one of the second aspect and the possible implementations of the second aspect.

According to a ninth aspect, a communication apparatus is provided, and has a function of implementing the method according to the third aspect. The function may be implemented by hardware, or may be implemented by executing corresponding software by hardware. The hardware or software includes one or more modules corresponding to the foregoing function.

According to a tenth aspect, a communication apparatus is provided, and has a function of implementing the method according to the fourth aspect. The function may be implemented by hardware, or may be implemented by executing corresponding software by hardware. The hardware or software includes one or more modules corresponding to the foregoing function.

According to an eleventh aspect, a communication apparatus is provided, and has a function of implementing the method according to the fifth aspect or the sixth aspect. The function may be implemented by hardware, or may be implemented by executing corresponding software by hardware. The hardware or software includes one or more modules corresponding to the foregoing function.

According to a twelfth aspect, this application provides a communication device, including at least one processor. The at least one processor is coupled to at least one memory, the at least one memory is configured to store a computer program or instructions, and the at least one processor is configured to invoke the computer program or the instructions from the at least one memory and run the computer program or the instructions, so that the communication device performs the method according to the third aspect.

According to a thirteenth aspect, this application provides a communication device, including at least one processor. The at least one processor is coupled to at least one memory, the at least one memory is configured to store a computer program or instructions, and the at least one processor is configured to invoke the computer program or the instructions from the at least one memory and run the computer program or the instructions, so that the communication device performs the method according to the fourth aspect.

According to a fourteenth aspect, this application provides a communication device, including at least one processor. The at least one processor is coupled to at least one memory, the at least one memory is configured to store a computer program or instructions, and the at least one processor is configured to invoke the computer program or the instructions from the at least one memory and run the computer program or the instructions, so that the communication device performs the method according to the fifth aspect or the sixth aspect.

According to a fifteenth aspect, this application provides a computer program product. The computer program product includes computer program code, and when the computer program code is run on a computer, the method according to the third aspect is performed.

According to a sixteenth aspect, this application provides a computer program product. The computer program product includes computer program code, and when the computer program code is run on a computer, the method according to the fourth aspect is performed.

According to a seventeenth aspect, this application provides a computer program product. The computer program product includes computer program code, and when the computer program code is run on a computer, the method according to the fifth aspect or the sixth aspect is performed.

According to an eighteenth aspect, this application provides a computer-readable storage medium. The computer-readable storage medium stores computer instructions, and when the computer instructions are run on a computer, the method according to the third aspect is performed.

According to a nineteenth aspect, this application provides a computer-readable storage medium. The computer-readable storage medium stores computer instructions, and when the computer instructions are run on a computer, the method according to the fourth aspect is performed.

According to a twentieth aspect, this application provides a computer-readable storage medium. The computer-readable storage medium stores computer instructions, and when the computer instructions are run on a computer, the method according to the fifth aspect or the sixth aspect is performed.

According to a twenty-first aspect, a chip is provided, including a processor, configured to read instructions stored in a memory. When the processor executes the instructions, the chip is enabled to implement the method according to the third aspect.

According to a twenty-second aspect, a chip is provided, including a processor, configured to read instructions stored in a memory. When the processor executes the instructions, the chip is enabled to implement the method according to the fourth aspect.

According to a twenty-third aspect, a chip is provided, including a processor, configured to read instructions stored in a memory. When the processor executes the instructions, the chip is enabled to implement the method according to the fifth aspect or the sixth aspect.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or may be a processor, for example, a general-purpose processor that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

### BRIEF DESCRIPTION OF DRAWINGS

FIG. 1 is a diagram of an application scenario of a Bluetooth connection method according to an embodiment of this application;
FIG. 2 is a diagram of a Bluetooth connection method according to an embodiment of this application;
FIG. 3 is a diagram of another Bluetooth connection method according to an embodiment of this application;
FIG. 4 is a diagram of still another Bluetooth connection method according to an embodiment of this application;
FIG. 5 is a diagram of still another Bluetooth connection method according to an embodiment of this application;
FIG. 6 to FIG. 8 are diagrams of user interfaces of a mobile phone according to an embodiment of this application;
FIG. 9 shows a structure of a Bluetooth packet according to an embodiment of this application;
FIG. 10 shows a communication apparatus according to an embodiment of this application; and
FIG. 11 shows an electronic device according to an embodiment of this application.

### DESCRIPTION OF EMBODIMENTS

The following describes technical solutions of this application with reference to accompanying drawings.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally represents an "or" relationship between associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in still some other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner.

In this specification, the terms "first", "second", "third", "fourth", and the like (if any) are intended to distinguish between similar objects but do not necessarily indicate a specific order or sequence. It should be understood that the terms used in such a way are interchangeable in proper circumstances.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, or a 5th generation (5th generation, 5G) system.

A terminal device in embodiments of this application may be a device having a wireless transceiver function. The terminal device may be user equipment (UE), an access terminal, a subscriber unit, a subscriber station, a mobile station, a mobile console, a remote station, a remote terminal, a mobile device, a user terminal, a terminal, a wireless communication device, a user agent, a user apparatus, or the like. The terminal device may be deployed on land, including an indoor or outdoor terminal device, and a handheld or vehicle-mounted terminal device; may be deployed on water (for example, on a ship); or may be deployed in the air (for example, on an airplane, a balloon, or a satellite). The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal in a smart home (smart home), and/or the like.

A network device in embodiments of this application may be a device configured to communicate with a terminal device. The network device may be a base transceiver station (base transceiver station, BTS) in a global system for mobile communications (global system for mobile communications, GSM) or code division multiple access (code division multiple access, CDMA), may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay station, a vehicle-mounted device, a wearable device, a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), an integrated access and backhaul (integrated access and backhaul, IAB), a network device in a 5G network, a network device in a PLMN network, or the like. This is not limited in embodiments of this application. In this application, the technical solutions of this application are described by using an example in which a base station serves as a network device.

Before embodiments of this application are described, definitions of some terms that may be used below are first described.

Bluetooth low energy (BLE) is a wireless personal area network technology. Compared with classic Bluetooth, the low-energy Bluetooth aims to significantly reduce power consumption and costs while maintaining a same communication range.

Devices that support a BLE communication protocol, or referred to as BLE devices, may be classified into a primary (master or central) device and a secondary (peripheral) device. After a connection between the primary device and the secondary device is established, the primary device and the secondary device may receive and send data to each other. The primary device may initiate a scan connection to the secondary device. For example, a mobile phone usually serves as a BLE primary device. The secondary device can only broadcast and wait for a connection from the primary device. For example, a smart band serves as a BLE secondary device. A BLE device may serve as a primary device or a secondary device.

The BLE devices may be further classified into an observer (observer) and a broadcaster (broadcaster). The observer may listen to a broadcast event in the air. A difference from the primary device is that the observer cannot initiate a connection, and can only continuously scan for the secondary device. The broadcaster can continuously broadcast information. A difference from the secondary device is that the broadcaster cannot be connected to the primary device and can only broadcast data.

The BLE devices may communicate with each other in two manners: a broadcast manner and a connection manner. In the broadcast manner, the broadcaster sends data to the observer in a broadcast manner, which is a connectionless communication manner. In the connection manner, the primary device and the secondary device establish a permanent connection, and periodically exchange data between the two devices, where content of the data is diversified.

Pairing (pairing) is a mechanism for implementing security of Bluetooth radio frequency communication, and includes processes such as pairing capability exchange, device authentication, key generation, connection encryption, and confidential information distribution. A purpose of pairing is to encrypt a connection, authenticate a device, and generate a key.

Bonding (bonding) is a mechanism for implementing security of Bluetooth radio frequency communication. During pairing, a long-term key is generated. If both pairing parties store the long-term key in a flash memory, when the two devices are reconnected, a pairing procedure may be skipped, and a Bluetooth connection is directly encrypted by using the long-term key. This state of the devices is referred to as bonding.

Reconnection is a process in which after a primary device and a secondary device that have been paired are disconnected from each other (for example, the primary device is powered off or the secondary device is too far away), the primary device and the secondary device are capable of being connected to each other without performing a pairing procedure again when the primary device and the secondary device are connected to each other again. This process is referred to as reconnection.

A Bluetooth gateway is a gateway device that supports a Bluetooth connection and further supports at least one of a plurality of communication modes such as a wireless network (Wi-Fi) and the Ethernet. The Bluetooth gateway may be applied to various internet of things scenarios.

A mesh network (mesh network) is a network over which data and control instructions are transmitted between network nodes in a dynamic routing manner. According to this network, a connection between the nodes can be kept complete. When a node in a network topology fails or cannot provide a service, this architecture allows a new route to be formed in a "hopping" manner and then sends information to a transmission destination.

A smart door lock, or referred to as a smart lock, is an electromechanical lock that receives instructions and an encryption key from an authorized device according to a wireless protocol, to perform locking and unlocking operations. The smart door lock may perform communication through the low-energy Bluetooth.

A hypertext transfer protocol persistent connection (hypertext transfer protocol persistent connection, also referred to as http keep-alive or http connection reuse), also referred to as a lasting connection, is a method in which a transmission control protocol connection is used to send and receive a plurality of http requests/responses, instead of opening a new connection for each new request/response.

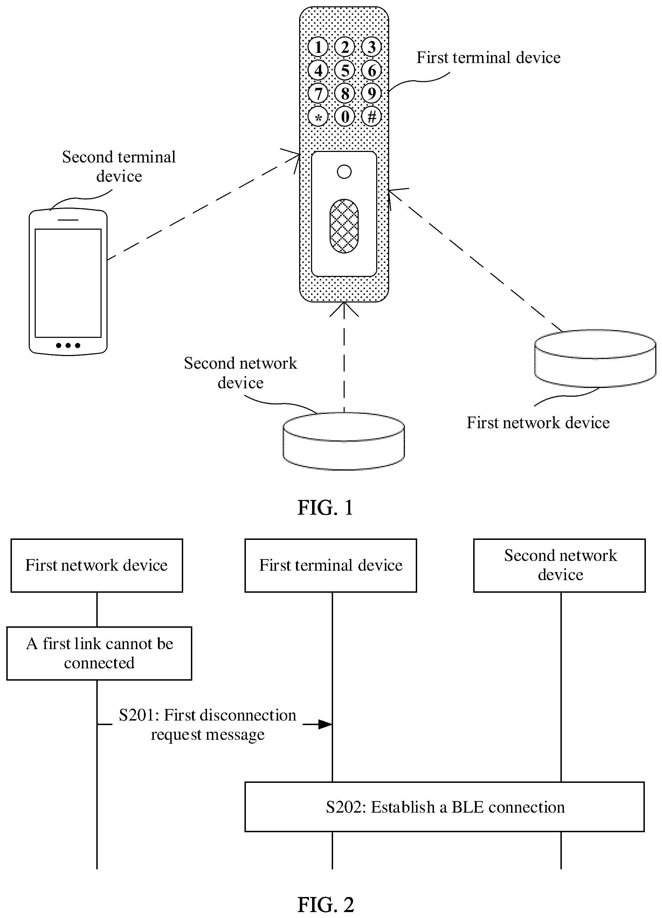

FIG. 1 is an application scenario to which an embodiment of this application is applicable. The application scenario may include a first terminal device, a second terminal device, a first network device, and a second network device. Both the terminal device and the network device support BLE communication.

The first network device and the second network device may further support more other communication manners, for example, a wireless network and the Ethernet.

In a possible implementation, the first network device supports both BLE communication and first communication, and the first communication may be one or more of wired communication or wireless communication other than the BLE communication. The first network device may establish a first link based on the first communication. The first link may also be referred to as a first communication link, a first communication channel, or the like, and is a physical channel used for information transmission.

In a possible implementation, the second network device supports both BLE communication and second communication, and the second communication may be one or more of wired communication or wireless communication other than the BLE communication. The second network device may establish a second link based on the second communication. The second link may also be referred to as a second communication link, a second communication channel, or the like, and is a physical channel used for information transmission.

The first communication and the second communication may be in a same communication manner, or may be in different communication manners. Specific communication manners of the first communication and the second communication are determined based on hardware and/or software of the first network device and the second network device. When the first communication and the second communication are in a same communication manner, the first network device and the second network device may be a same type of network device. For example, both the first communication and the second communication are wireless network communication, and both the first network device and the second network device are Bluetooth gateways.

The first terminal device and the second terminal device may also support more other communication manners, for example, a wireless network and the Ethernet.

Every two of the first terminal device, the second terminal device, the first network device, and the second network device are capable of being connected to each other through BLE, and a same device in the first terminal device, the second terminal device, the first network device, and the second network device may also be connected to a plurality of devices through the BLE. In some examples, the first terminal device is a door lock, the second terminal device is a mobile phone, and the first network device and the second network device are Bluetooth gateways.

In a possible implementation, the first terminal device is capable of being connected to only one device through the BLE at a same moment. In this case, the first terminal device can communicate only with the one device through the BLE, and another device cannot communicate with the first terminal device. For example, the first terminal device is a Bluetooth watch, the second terminal device is a mobile phone, and the first network device is a notebook computer. When the mobile phone performs data transmission with the Bluetooth watch, if the notebook computer also needs to exchange information with the Bluetooth watch, a connection between the mobile phone and the Bluetooth watch needs to be disconnected, and a connection between the notebook computer and the Bluetooth watch needs to be established, so that information exchange between the notebook computer and the Bluetooth watch can be implemented.

Data transmission between BLE devices may be usually completed in a short time. Therefore, time division may be considered for data transmission requests from different devices, and after data transmission with one device is completed, another device performs a corresponding data transmission process.

The following describes in detail a Bluetooth connection method provided in this application.

FIG. 2 shows a Bluetooth connection method according to this application. According to the method, a first network device supports BLE communication and first communication, a second network device supports BLE communication and second communication, the first network device provides a first link, the second network device provides a second link, both the first link and the second link are used to transmit information for a first terminal device, the first link is established based on the first communication, and the second link is established based on the second communication.

That the first link is established based on the first communication may also be understood as that the first link corresponds to the first communication. For example, if the first communication is Wi-Fi, the first link may be a channel for data transmission between the first network device and another device after the first network device is connected to the another device through Wi-Fi.

That the second link is established based on the second communication may also be understood as that the second link corresponds to the second communication. For example, if the second communication is the Ethernet, the second link may be a channel for data transmission between the second network device and another device after the second network device is connected to the another device via the Ethernet.

The first communication and the second communication may be in a same communication manner, or may be in different communication manners. Specific communication manners of the first communication and the second communication are determined based on hardware and/or software of the first network device and the second network device. When the first communication and the second communication are in a same communication manner, the first network device and the second network device may be a same type of network device. For example, both the first communication and the second communication are wireless network communication, and both the first network device and the second network device are Bluetooth gateways.

S201: The first network device sends a first disconnection request message, and correspondingly, the first terminal device receives the first disconnection request message.

Specifically, the first network device sends the first disconnection request message to the first terminal device when the first network device cannot access a server through the first link or when the first network device receives indication information sent by a second terminal device, where the first disconnection request message is used to request to disconnect a BLE communication connection between the first network device and the first terminal device. Herein, the second terminal device is configured to control the first terminal device, the indication information indicates to disconnect the BLE communication connection between the first network device and the first terminal device, and the first network device is configured to transmit information for the first terminal device to the server through the first link.

That the first network device cannot access the server may be that the first link is faulty, or may be that the server rejects an access request of the first network device, or the like. This is not limited in this application.

After receiving the first disconnection request message, the first terminal device may disconnect the BLE communication connection from the first network device.

Before the first network device sends the first disconnection request message to the first terminal device, the first network device and the first terminal device are in a BLE communication connection state. In other words, a process of pairing between the two devices has been completed, and a BLE connection has been established.

In a possible implementation, before the second network device establishes a BLE communication connection to the first terminal device, the first terminal device sends a first Bluetooth broadcast, where the first Bluetooth broadcast indicates that the first terminal device is capable of being connected.

For a device that has been paired with the first terminal device, that the first terminal device is capable of being connected may be understood as that the first terminal device is capable of being reconnected. For a device that has not been paired with the first terminal device, that the first terminal device is capable of being connected may be understood as that the first terminal device is capable of being connected through pairing. In other words, that the first terminal device is capable of being connected means that the first terminal device is in an available state, and another device can establish a connection to the first terminal device. Similarly, that the first terminal device is incapable of being connected means that the first terminal device is in an unavailable state, and another device cannot establish a connection to the first terminal device.

In some examples, the first Bluetooth broadcast includes a target field, and the target field may indicate that the first terminal device is in a connectable state. The target field may be a newly added field of the first Bluetooth broadcast.

After disconnecting the BLE communication connection from the first network device, the first terminal device may send the Bluetooth broadcast, to indicate that the first terminal device is currently in a connectable state. In this way, after obtaining, through scanning, the broadcast sent by the first terminal device, the second network device may perform an operation of connecting to the first terminal device. Sending of the Bluetooth broadcast helps increase a success rate of establishing the BLE communication connection between the first terminal device and the second network device.

A specific field with an identification function is set in the Bluetooth broadcast, to help increase efficiency of parsing Bluetooth broadcast information by a device that receives the Bluetooth broadcast, and help improve compatibility between the Bluetooth connection method provided in this application and an existing Bluetooth connection method.

The first network device may determine, in a plurality of manners, whether the first link is connected. For example, the first network device may send a test signal through the first link. If a response signal of the test signal may be received within preset duration, the first network device determines that the first link is in a connected state. If no response signal of the test signal is received within preset duration, the first network device determines that the first link is in an unconnected state.

For another example, whether the first link is connected may alternatively be determined based on a notification message sent, to the first network device, by another network device connected to the first network device, and the notification message indicates whether the first link is in a connected state.

S202: The first terminal device establishes the BLE connection to the second network device.

Specifically, the second network device may send a connection request message to the first terminal device, where the connection request message is used to request to establish the BLE communication connection to the first terminal device. After the first terminal device receives the connection request message, the first terminal device may establish the BLE connection to the second network device.

If the second network device is connected to the first terminal device for the first time, before the second network device establishes the BLE connection to the first terminal device, the second network device and the first terminal device may first perform a pairing operation. After the pairing succeeds, the second network device establishes the BLE connection to the first terminal device.

After the first terminal device establishes the BLE connection to the second network device, the first terminal device may perform information transmission through the second link provided by the second network device.

For example, the second link is an uplink, and the first terminal device may report status information of the first terminal device to the server (the cloud) through the second link.

In a possible implementation, after the first terminal device establishes the BLE connection to the second network device, the first terminal device sends a second Bluetooth broadcast, where the second Bluetooth broadcast indicates that the first terminal device is incapable of being connected.

In some examples, the target field is not set in the second Bluetooth broadcast. For a Bluetooth broadcast in which the target field is not set, a receiving device of the Bluetooth broadcast may determine that a sending device of the Bluetooth broadcast is in an un-reconnectable state.

In some other examples, the second Bluetooth broadcast includes an identifier field, and the identifier field indicates that the first terminal device is incapable of being reconnected. After the second network device establishes the BLE connection to the first terminal device, the first terminal device sends a broadcast indicating that the first terminal device is currently in an unconnectable state. After obtaining, through scanning, the broadcast, another device does not send a connection request message to the first terminal device. This helps reduce interference caused by the another device to the connection between the first terminal device and the second network device, and helps improve stability of the connection between the first terminal device and the second network device.

In some examples, the first terminal device is a door lock, and the first network device and the second network device are Bluetooth gateways. The first terminal device may alternatively be another device that supports BLE communication, for example, a band or a watch. The first network device and the second network device may alternatively be devices that support both BLE communication and another communication manner, for example, mobile phones or tablet computers.

The first terminal device may transmit information through data transmission channels provided by a plurality of network devices, and the first terminal device is capable of being connected to the network device by using BLE. When a currently connected network device cannot provide a data transmission channel for the first terminal device, the current network device may disconnect a BLE communication connection from the first terminal device, so that another network device is capable of being connected to the first terminal device, to complete a data transmission task of the first terminal device. Compared with a method in which the first terminal device is connected to a plurality of network devices by using the BLE, this method helps reduce power consumption of the first terminal device, and helps reduce complexity of data transmission performed by the terminal device.

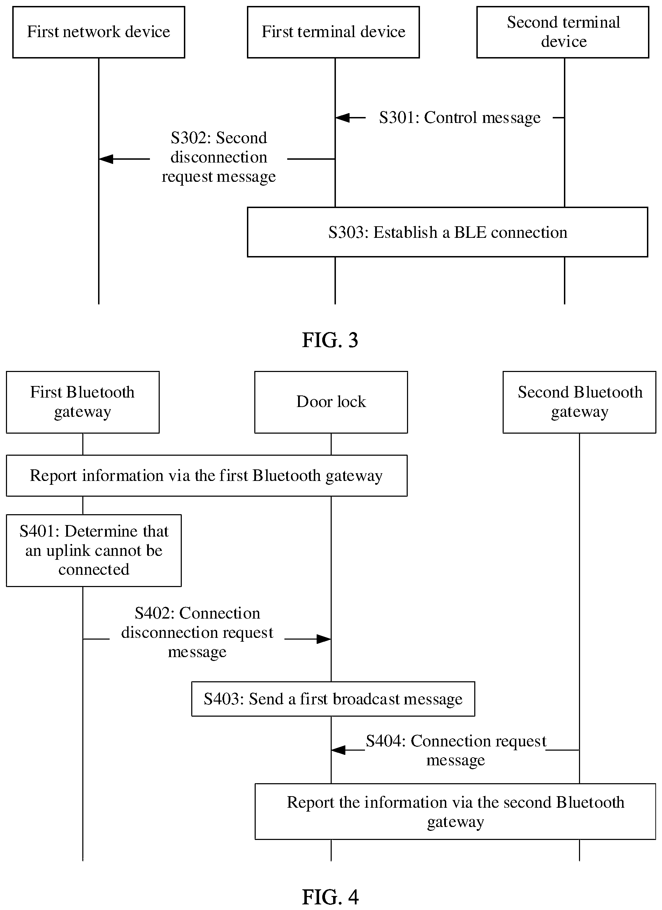

FIG. 3 shows another Bluetooth connection method according to an embodiment of this application. According to the method, a first network device supports BLE communication and first communication, the first network device is configured to provide a first link, the first link is established based on the first communication, the first link is used to transmit information for a first terminal device, and a second terminal device is configured to control the first terminal device.

S301: The second terminal device sends a control message, and correspondingly, the first terminal device receives the control message.

The control message indicates to disconnect a BLE communication connection between the first network device and the first terminal device.

Before the second terminal device sends the control message, the second terminal device may determine whether the first terminal device can be detected. When determining that the first terminal device can be detected, the second terminal device sends the control message to the first terminal device.

In view of a transmission distance of Bluetooth communication, if the second terminal device cannot detect the first terminal device, it indicates that the first terminal device is not near the second terminal device. In this case, the second terminal device may not send the control message to the first terminal device.

The control message sent by the second terminal device may be sent to the first terminal device through a plurality of communication paths. For example, the first terminal device is currently connected to the first network device, and the control message may be sent to the first terminal device via the first network device. For another example, the first terminal device further supports a wireless communication manner, and the second terminal device may send the control message to the first terminal device through wireless communication with the first terminal device.

Optionally, the second terminal device may alternatively send indication information to the first network device, where the indication information may indicate the first network device to disconnect the BLE connection from the first terminal device.

In other words, when the first network device is connected to the first terminal device, the second terminal device may indicate the first network device to disconnect the connection from the first terminal device, or the second terminal device may indicate the first terminal device to disconnect the connection from the first network device.

When the second terminal device needs to control the first terminal device, the second terminal device may send control information to the first terminal device, so that the first terminal device disconnects the current BLE connection, and therefore can establish a BLE connection to the second terminal device. Compared with a method in which the first terminal device is simultaneously connected to a plurality of devices, in this method, the first terminal device needs to receive information from only one device at a time, and does not need to distinguish the received information. This can reduce complexity of BLE communication of the first terminal device, and increase efficiency of processing the received information by the first terminal device.

S302: The first terminal device sends a second disconnection request message, and correspondingly, the first network device receives the second disconnection request message.

The second disconnection request message is used to request to disconnect the BLE communication connection between the first terminal device and the first network device.

After receiving the control message, the first terminal device may send the second disconnection request message to the first network device, to request to disconnect the BLE connection from the first network device.

Optionally, if the second terminal device sends, to the first network device in S301, the indication information indicating to disconnect the BLE connection from the first terminal device, the second disconnection request message in S302 may be sent by the first network device to the first terminal device.

S303: The first terminal device establishes the BLE connection to the second terminal device.

In a possible implementation, before the second terminal device establishes the BLE communication connection to the first terminal device, the first terminal device sends a third Bluetooth broadcast, where the third Bluetooth broadcast indicates that the first terminal device is incapable of being connected.

For a device that has been paired with the first terminal device, that the first terminal device is capable of being connected may be understood as that the first terminal device is capable of being reconnected. For a device that has not been paired with the first terminal device, that the first terminal device is capable of being connected may be understood as that the first terminal device is capable of being connected through pairing. In other words, that the first terminal device is capable of being connected means that the first terminal device is in an available state, and another device can establish a connection to the first terminal device. Similarly, that the first terminal device is incapable of being connected means that the first terminal device is in an unavailable state, and another device cannot establish a connection to the first terminal device.

The first terminal device may continuously send the third Bluetooth broadcast within preset duration.

Optionally, after the third Bluetooth broadcast is continuously sent, if the first terminal device does not establish the BLE connection to the second terminal device, the first terminal device may send a fourth Bluetooth broadcast, where the fourth Bluetooth broadcast indicates that the first terminal device is capable of being connected.

In some examples, a target field is not set in the third Bluetooth broadcast. For a Bluetooth broadcast in which the target field is not set, a receiving device of the Bluetooth broadcast may determine that a sending device of the Bluetooth broadcast is in an unconnectable state.

In some other examples, an identifier field is set in the third Bluetooth broadcast, and the identifier field indicates that the first terminal device is incapable of being connected. In this case, after receiving the third Bluetooth broadcast, the second terminal device may directly ignore the identifier field in the third Bluetooth broadcast, and continue to request to establish the BLE communication connection to the first terminal device. After receiving the Bluetooth broadcast, the first network device determines, based on the Bluetooth broadcast, that the first terminal device is in an unconnectable state, and therefore no longer requests to establish the BLE communication connection to the first terminal device.

In some other examples, the third Bluetooth broadcast includes an identifier field, and the identifier field indicates that the first terminal device is incapable of being connected.

Before establishing the BLE connection to the second terminal device, the first terminal device sends a broadcast message indicating that the first terminal device is incapable of being connected. After receiving the broadcast message, a device other than the second terminal device may determine that the first terminal device is in the unconnectable state, so that the first terminal device with the disconnected BLE connection is capable of being connected only to the second terminal device. This helps increase a success rate of establishing the BLE connection between the first terminal device and the second terminal device. The broadcast message is sent only within preset duration, and the second terminal device is capable of being connected to the first terminal device within limited time. This helps prevent another device from intruding the first terminal device, improve security of the first terminal device, and increase a success rate of connecting the first terminal device to the second terminal device.

In some examples, the first terminal device sends a fourth Bluetooth broadcast when the first terminal device disconnects the BLE communication connection from the second terminal device, where the fourth Bluetooth broadcast may indicate that the first terminal device is in a connectable state.

In a possible implementation, the Bluetooth broadcast includes an indication field. When a value of the indication field is a first value, the Bluetooth broadcast indicates that only the second terminal device is capable of being connected to the first terminal device. When a value of the indication field is a second value, the Bluetooth broadcast indicates that only the first network device is capable of being connected to the first terminal device. When a value of the indication field is a third value, the Bluetooth broadcast indicates that both the first terminal device and the first network device are capable of being connected to the first terminal device.

For example, when the indication field is 0, the Bluetooth broadcast indicates that only the second terminal device is capable of being connected to the first terminal device. When the indication field is 1, the Bluetooth broadcast indicates that only the first network device is capable of being connected to the first terminal device. When the indication field is set to another value, the Bluetooth broadcast indicates that both the second terminal device and the first network device are capable of being connected to the first terminal device.

After the second terminal device disconnects the BLE connection from the first terminal device, the fourth Bluetooth broadcast is sent, so that another device, for example, the network device can determine that the first terminal device is in a connectable state, and therefore can establish a BLE connection to the first terminal device. Implementing this technical solution helps increase a rate at which the first terminal device establishes the BLE with the network device after disconnecting the connection from the second terminal device, and increase efficiency of switching a connected device of the first terminal device in a BLE single-connection state.

In some examples, the first terminal device is a door lock, the second terminal device is a mobile phone, and the first network device is a Bluetooth gateway. The first terminal device may alternatively be another device that supports BLE communication, for example, a band or a watch. The second terminal device may alternatively be another device that supports BLE communication and another communication manner, for example, a tablet computer or a notebook computer. Similarly, the first network device may alternatively be another device that supports BLE communication and another communication manner, for example, a tablet computer or a notebook computer.

FIG. 4 shows still another Bluetooth connection method according to an embodiment of this application. In this embodiment, a Bluetooth gateway provides an uplink for a door lock to transmit data. When an uplink of a first Bluetooth gateway is unconnected, a BLE connection between the first Bluetooth gateway and the door lock is disconnected.

When the door lock is initially set, a user may bond the door lock to a terminal device (for example, a mobile phone), and then may send information about the door lock to all Bluetooth gateways that are under a same account as the terminal device. After obtaining the information about the door lock, the Bluetooth gateway is capable of being connected to the door lock based on a Bluetooth broadcast sent by the door lock. When the door lock is not connected to any Bluetooth gateway, the door lock may send a broadcast indicating that the door lock is capable of being reconnected. After the door lock is connected to any Bluetooth gateway, the door lock may send a broadcast indicating that the door lock is incapable of being reconnected.

A connection established between the door lock and the Bluetooth gateway may be considered as a lasting connection or a persistent connection. To be specific, after one connection is completed, the door lock and the Bluetooth gateway may transmit information to each other in a long period of time.

S401: The first Bluetooth gateway determines that the uplink cannot be connected.

The door lock may report a status of the door lock and other information (for example, identity information of an unlocking user and unlocking time) through the uplink provided by the first Bluetooth gateway or an uplink provided by a second Bluetooth gateway. A background in which this embodiment is performed is that the door lock reports information through the uplink provided by the first Bluetooth gateway. In this embodiment, an example in which the first Bluetooth gateway provides a first uplink and the second Bluetooth gateway provides a second uplink is used for description.

In some scenarios, that the uplink cannot be connected may also be understood as that the first Bluetooth gateway cannot access a server through the uplink.

The first Bluetooth gateway may determine, in a plurality of manners, whether the uplink is in a connected state. For example, the uplink is established based on a wireless network, and the first Bluetooth gateway may query, from a router connected to the first Bluetooth gateway, whether the uplink corresponding to the first Bluetooth gateway is in the connected state.

In another possible case, the first Bluetooth gateway receives indication information sent by the mobile phone, where the indication information indicates the first Bluetooth gateway to disconnect the BLE communication connection from the door lock. In response to the indication information, the first Bluetooth gateway may also perform actions performed by the first Bluetooth gateway in S402 and subsequent steps.

S402: The first Bluetooth gateway sends a connection disconnection request message, and correspondingly, the door lock receives the connection disconnection request message.

When determining that the first uplink cannot be connected, the first Bluetooth gateway may send a BLE connection disconnection request message to the door lock. After receiving the request message, the door lock may disconnect the BLE connection from the first Bluetooth gateway.

S403: The door lock broadcasts a reconnectable message.

After disconnecting the BLE connection from the first Bluetooth gateway, the door lock may send a first broadcast message. The first broadcast message may indicate that the door lock is in a reconnectable state. This helps another device perform a BLE connection to the door lock.

S404: The second Bluetooth gateway sends a connection request message, and correspondingly, the door lock receives the connection request message.

After receiving the first broadcast message sent by the door lock, the second Bluetooth gateway may determine, based on the first broadcast message, that the door lock is in the reconnectable state. Further, the second Bluetooth gateway may send a first connection request message to the door lock, where the first connection request message is used to request to establish a BLE connection to the door lock.

After the door lock establishes the BLE connection to the second Bluetooth gateway, the door lock may report the status information of the door lock and other data through the second uplink provided by the second Bluetooth gateway.

In a possible implementation, when determining that the first uplink is restored to a connected state, the first Bluetooth gateway may re-establish a BLE connection to the door lock. In other words, the second Bluetooth gateway may alternatively be the first Bluetooth gateway of which the first uplink is restored to connection.

In some examples, the door lock may send a second broadcast message when the door lock establishes the BLE connection to the second Bluetooth gateway, where the second broadcast message indicates that the door lock is in an unconnectable state. Further, a device that receives the second broadcast message may no longer request to establish a BLE connection to the door lock, and the door lock does not need to process a connection request message sent by another device. This helps save resources of the door lock and improve stability of communication between the door lock and the second Bluetooth gateway.

In this embodiment, when determining that the uplink for the door lock to upload information is unconnected, the Bluetooth gateway disconnects the BLE connection between the Bluetooth gateway and the door lock, so that another Bluetooth gateway can establish a new BLE connection to the door lock, to provide a new data upload channel for the door lock. This helps improve security and reliability of the door lock. Compared with a method in which the door lock and a plurality of Bluetooth gateways form a mesh network, the Bluetooth connection method provided in this embodiment can also enable normal reporting of data of the door lock, and reduce complexity of BLE communication of the door lock. After disconnecting the BLE connection from the first Bluetooth gateway, the door lock sends the broadcast indicating that the door lock is capable of being reconnected. This helps increase efficiency of establishing the BLE connection to the second Bluetooth gateway by the door lock.

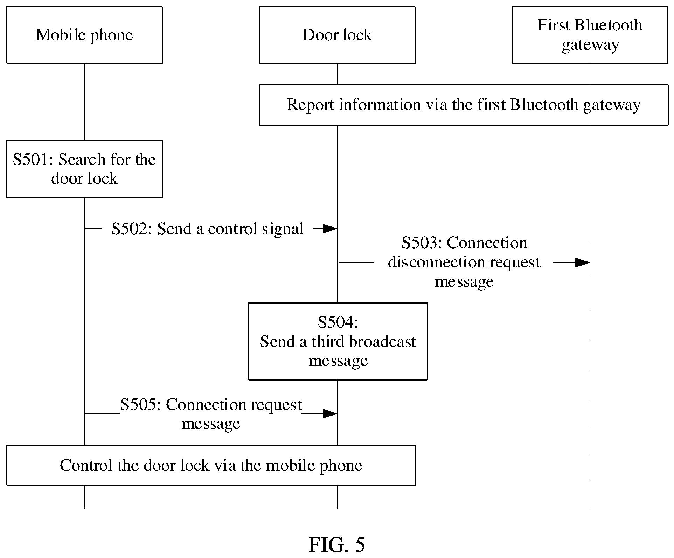

FIG. 5 shows still another Bluetooth connection method according to an embodiment of this application. In this embodiment, a first Bluetooth gateway provides an uplink for a door lock to report door lock status information, and a mobile phone sends indication information to indicate the door lock to disconnect a current BLE connection. Then, the mobile phone may establish a BLE connection to the door lock again, to further send a control signal to the door lock.

S501: The mobile phone searches for the door lock.

The mobile phone may perform, based on a plurality of trigger mechanisms, an operation of searching for a Bluetooth broadcast from the door lock.

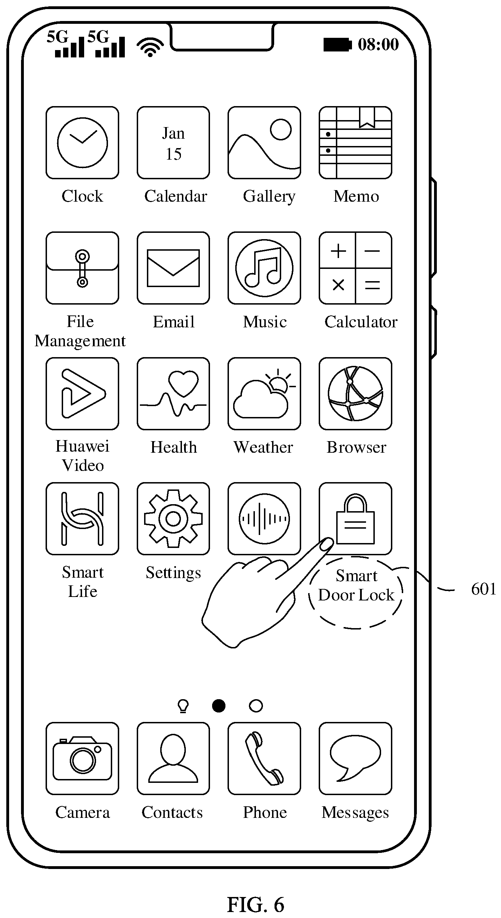

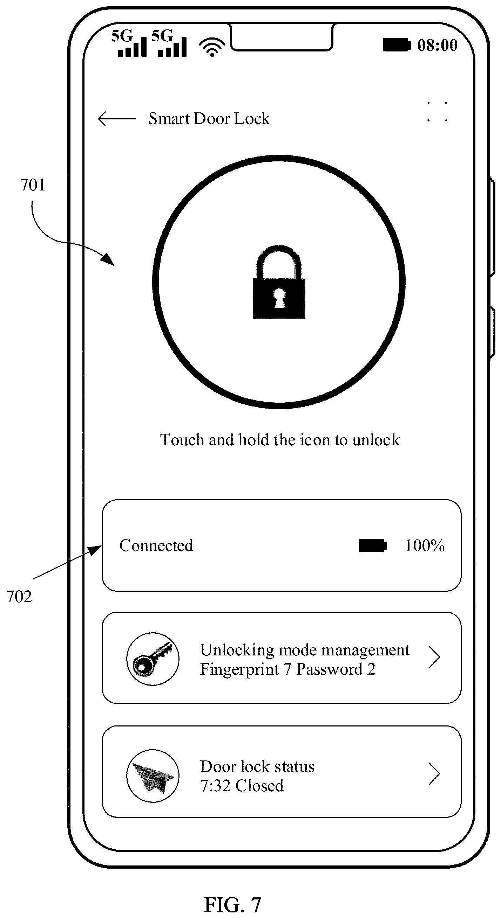

In a possible implementation, as shown in FIG. 6, an application 601 for managing the door lock is installed on the mobile phone, and the application 601 may be referred to as "Smart Door Lock". In response to an operation of selecting (for example, tapping) the application 601 by a user, the mobile phone may display a user interface 701 of "Smart Door Lock" shown in FIG. 7. The mobile phone may perform the operation of searching for a Bluetooth broadcast from the door lock after detecting an operation of starting "Smart Door Lock" by the user, or the mobile phone may perform the operation of searching for a Bluetooth broadcast from the door lock after detecting an operation of the user on the user interface of "Smart Door Lock".

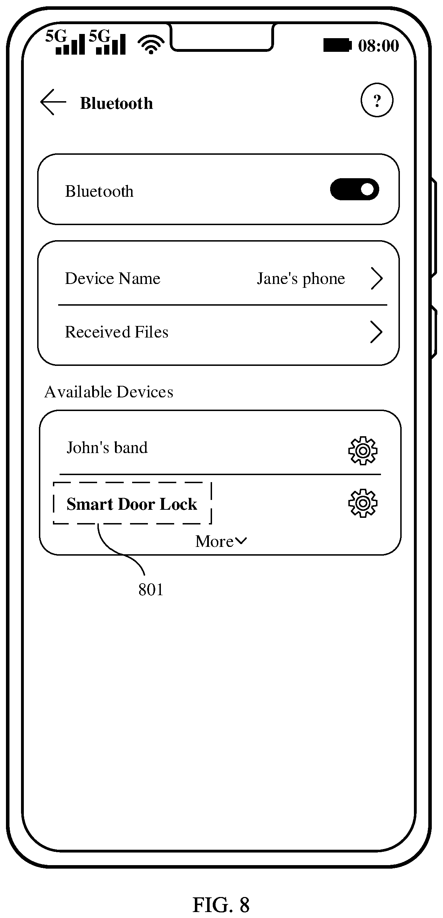

In another possible implementation, in response to the operation of enabling Bluetooth of the mobile phone by the user, the mobile phone may scan for Bluetooth broadcasts in the air. For a Bluetooth broadcast that can be obtained through scanning, the mobile phone may determine a sending device of the Bluetooth broadcast, and display, in an "Available Device" column on an interface shown in FIG. 8, the Bluetooth device that can be obtained through scanning. When the mobile phone obtains, through scanning, the Bluetooth broadcast from the door lock, a device name corresponding to the door lock, that is, "Smart Door Lock" 801, may be displayed in the "Available Device" column.

S502: The mobile phone sends a control signal, and correspondingly, the door lock receives the control signal.

In a possible implementation, in response to an operation of selecting the "Smart Door Lock" application shown in FIG. 6 by the user, after the door lock is obtained through searching, the mobile phone may send the control signal to the door lock. The control signal is used to request to disconnect a current BLE connection of the door lock.

For example, the door lock is currently connected to the first Bluetooth gateway, the mobile phone may send the control signal to the first Bluetooth gateway, and then the first Bluetooth gateway sends the control signal to the door lock, so that the door lock can receive the control signal sent by the mobile phone.

Optionally, the mobile phone may alternatively send a connection disconnection request message to the first Bluetooth gateway, to request the first Bluetooth gateway to disconnect the connection from the door lock.

S503: The door lock sends a connection disconnection request message, and correspondingly, the first Bluetooth gateway receives the connection disconnection request message.

After receiving the control signal sent by the mobile phone, the door lock may determine that the mobile phone requests the door lock to disconnect the connection from the first Bluetooth gateway, so that the door lock can send connection disconnection request information to the first Bluetooth gateway. After receiving the connection disconnection request message, the first Bluetooth gateway disconnects the BLE connection from the door lock.

S504: The door lock sends a third broadcast message.

To enable the mobile phone to perform a BLE connection to the door lock, instead of performing a BLE connection to the door lock by another device, the door lock may send the third broadcast message, where the third broadcast message indicates that the door lock is currently in an un-reconnectable state. After receiving the third broadcast message, the another device may determine that the door lock is currently in the un-reconnectable state, and therefore does not request to establish the BLE connection to the door lock.

In a possible implementation, the door lock may send the third broadcast message within preset duration. The preset duration may be understood as a time period specially provided by the door lock for the mobile phone to connect.

If the mobile phone establishes the BLE connection to the door lock within the preset duration, the door lock may stop sending the third broadcast message. If the mobile phone does not establish the BLE connection to the door lock within the preset duration, the door lock may send a fourth broadcast message after the preset duration. The fourth broadcast message indicates that the door lock is in a reconnectable state. After receiving the fourth broadcast message, the Bluetooth gateway may re-establish a connection to the door lock.

S505: The mobile phone sends a connection request message, and correspondingly, the door lock receives the connection request message.

In a possible implementation, in response to the operation of selecting the "Smart Door Lock" application shown in FIG. 6 by the user, when the Bluetooth broadcast from the door lock is obtained through searching, the mobile phone may send the connection request message to the door lock. After receiving the connection request message, the door lock may establish the BLE connection to the mobile phone. After establishing the BLE connection to the door lock, the mobile phone may further control the door lock.

For example, after the door lock establishes the BLE connection to the mobile phone, the control interface of "Smart Door Lock" shown in FIG. 7 may display connection status information 702. The connection status information 702 indicates that the mobile phone has currently established the connection to the door lock. In this state, the user may send a control message to the door lock through the control interface, to control the door lock.

After completing operations such as controlling and setting the door lock, the mobile phone may disconnect the BLE connection from the door lock in response to an operation of the user. In this case, the door lock may send the fourth broadcast message, where the fourth broadcast message indicates that the door lock is currently in the reconnectable state.

After receiving the fourth broadcast message sent by the door lock, the Bluetooth gateway may establish a BLE connection to the door lock. After the BLE connection is established, the door lock may report the information like a status of the door lock through the uplink provided by the Bluetooth gateway.

In this embodiment, the mobile phone may control, by sending the control signal, the door lock to disconnect the current BLE connection, so that the mobile phone can establish the BLE connection to the door lock when necessary. Compared with a manner in which the door lock is capable of being connected to both the gateway and the mobile phone over a mesh network, the Bluetooth connection method provided in this embodiment reduces complexity of BLE communication of the door lock. After receiving control information from the mobile phone, the door lock may broadcast indication information indicating that the door lock is incapable of being reconnected currently, so that another device does not request to establish a connection to the door lock. This can increase a success rate of connecting the door lock to the mobile phone.

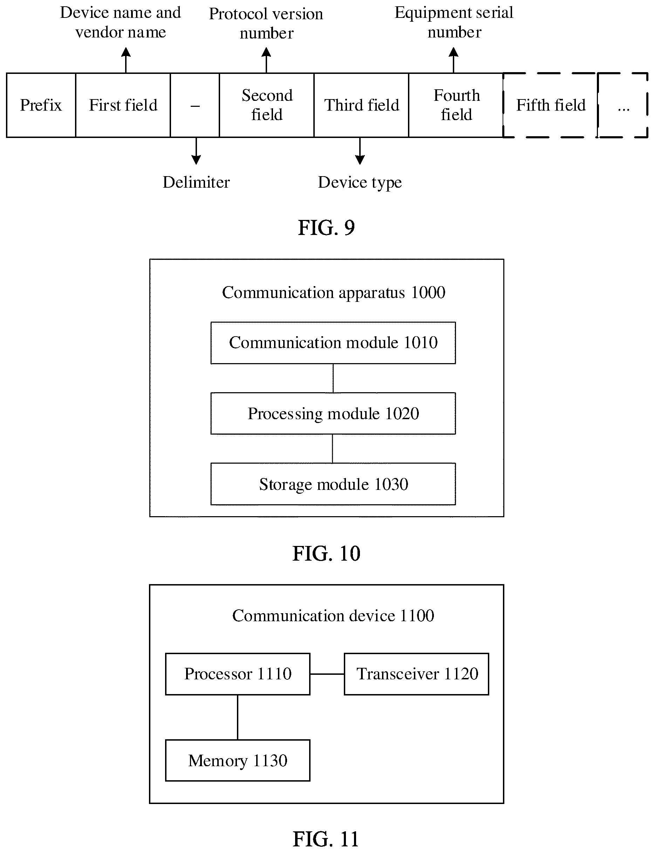

FIG. 9 shows a format of a Bluetooth broadcast packet according to an embodiment of this application. The format of the Bluetooth broadcast packet is applicable to the Bluetooth broadcast sent by the first terminal device or the door lock in the foregoing embodiments.

The Bluetooth broadcast packet may include a prefix field. The prefix field may include three bytes. For example, the prefix field may be "HI-". The Bluetooth broadcast packet may also include a first field. The first field identifies a device name of a sending device of the Bluetooth broadcast and a name of a device manufacturer. A length of the first field may be 10 bytes. The Bluetooth broadcast packet may further include a second field. The second field may identify a version number of a Bluetooth protocol corresponding to the Bluetooth broadcast. The second field may include one byte. The Bluetooth broadcast packet may further include a third field. The third field may indicate a device type of the sending device of the Bluetooth broadcast. A length of the third field may be 4 bytes. The Bluetooth broadcast packet may further include a fourth field. The fourth field may be used to store an equipment serial number (serial number) of the sending device of the Bluetooth broadcast. For example, the fourth field stores the last four digits of a serial number of the door lock.

In some examples, the Bluetooth broadcast packet may include a fifth field. The fifth field may indicate whether the sending device of the Bluetooth broadcast is currently in a connectable state, or the fifth field indicates whether a device that receives the Bluetooth broadcast can establish a connection to the sending device of the Bluetooth broadcast.

In a possible implementation, the fifth field includes one byte, and a value of the fifth field ranges from 0x00 to 0xFF. When the value of the fifth field is within a first threshold range, the fifth field indicates that the sending device of the Bluetooth broadcast is in the connectable state. When the value of the fifth field is not within a first threshold range, the fifth field indicates that the sending device of the Bluetooth broadcast is in an unconnectable state. Alternatively, when the fifth field is set to a first value, the fifth field indicates that the first terminal device is capable of being connected to the sending device of the Bluetooth broadcast. When the fifth field is set to a second value, the fifth field indicates that a network device, for example, a first network device or a second network device is capable of being connected to the sending device of the Bluetooth broadcast. When the fifth field is set to a third value, the fifth field indicates that both the first terminal device and a network device are capable of being connected to the sending device of the Bluetooth broadcast.

In another possible implementation, when the Bluetooth broadcast includes the fifth field, the sending device of the Bluetooth broadcast corresponding to the fifth field is in the connectable state. When the Bluetooth broadcast does not include the fifth field, the sending device of the Bluetooth broadcast corresponding to the fifth field is in an unconnectable state.

For another device that has been paired with the device, "in the connectable state" may be understood as that the another device that has been paired with the device is capable of being reconnected to the device, and for another device that has not been paired with the device, "in the connectable state" may be understood as that the device is capable of being connected through pairing.

A Bluetooth broadcast structure may further include more other fields. This is not limited in this application.

A fixed field is set in the Bluetooth broadcast structure to identify whether the sending device is in a connectable state, which helps improve applicability of the Bluetooth connection method provided in this embodiment, and also helps increase, to some extent, switching efficiency of switching a Bluetooth device in a single-connection state from being connected to a current device to being connected to another device.

It should be understood that sequence numbers of the foregoing processes do not mean an execution sequence in the foregoing method embodiments. The execution sequence of the processes should be determined based on functions and internal logic of the processes, and should not constitute any limitation on the implementation processes of embodiments of this application.

Based on a same inventive concept as the foregoing method embodiments, an embodiment of this application further provides a communication apparatus. The communication apparatus may have functions of the first terminal device (or the door lock), the second terminal device (or the mobile phone), and the network device (or the Bluetooth gateway) in the foregoing method embodiments, and may be configured to perform the steps performed the first terminal device, the second terminal device, or the network device in the foregoing method embodiments. The function may be implemented by hardware, or may be implemented by software or by executing corresponding software by hardware. The hardware or software includes one or more modules corresponding to the foregoing function.

In a possible implementation, a communication apparatus 1000 shown in FIG. 10 may be used as the first terminal device (or the door lock) in the foregoing method embodiments, and perform the steps performed by the first terminal device (or the door lock) in the foregoing method embodiments.

As shown in FIG. 10, the communication apparatus 1000 may include a communication module 1010 and a processing module 1020. The communication module 1010 and the processing module 1020 are coupled to each other.

The communication module 1010 may be configured to support the communication apparatus 1000 in performing communication, for example, performing sending and/or receiving actions performed by the first terminal device or the door lock, for example, S201, S301, S302, S402, S404, S502, S503, and S505 in FIG. 2, FIG. 3, FIG. 4, and FIG. 5.

The processing module 1020 may be configured to support the communication apparatus 1000 in performing a processing action in the foregoing method embodiments, for example, performing a processing action performed by the first terminal device or the door lock, for example, S202, S303, S403, or S504 in FIG. 2, FIG. 3, FIG. 4, and FIG. 5.

In another possible implementation, a communication apparatus 1000 shown in FIG. 10 may be used as the second terminal device or the mobile phone in the foregoing method embodiments, and perform the steps performed by the second terminal device or the mobile phone in the foregoing method embodiments.

As shown in FIG. 10, the communication apparatus 1000 may include a communication module 1010 and a processing module 1020. The communication module 1010 and the processing module 1020 are coupled to each other.

The communication module 1010 may be configured to support the communication apparatus 1000 in performing communication, for example, performing a sending and/or receiving action performed by the second terminal device or the mobile phone, for example, S301, S303, S502, or S505 in FIG. 3 and FIG. 5.

The processing module 1020 may be configured to support the communication apparatus 1000 in performing a processing action in the foregoing method embodiments, for example, performing processing actions performed by the second terminal device or the mobile phone, for example, S303 and S501 in FIG. 3 and FIG. 5.

In still another possible implementation, a communication apparatus 1000 shown in FIG. 10 may be used as the network device or the Bluetooth gateway in the foregoing method embodiments, and perform the steps performed by the network device or the Bluetooth gateway in the foregoing method embodiments.

As shown in FIG. 10, the communication apparatus 1000 may include a communication module 1010 and a processing module 1020. The communication module 1010 and the processing module 1020 are coupled to each other.

The communication module 1010 may be configured to support the communication apparatus 1000 in performing communication, for example, performing a sending and/or receiving action performed by the network device or the Bluetooth gateway, for example, S201, S301, S302, S402, S404, or S503 in FIG. 2, FIG. 3, FIG. 4, and FIG. 5.

The processing module 1020 may be configured to support the communication apparatus 1000 in performing a processing action in the foregoing method embodiments, for example, performing a processing action performed by the network device or the Bluetooth gateway, for example, S202 or S401 in FIG. 2 and FIG. 4.

Optionally, the communication apparatus 1000 may further include a storage module 1030, configured to store program code and data of the communication apparatus 1000.

FIG. 11 is a schematic block diagram of a communication device 1100 according to an embodiment of this application. As shown in the figure, the communication device 1100 includes at least one processor 1110 and a transceiver 1120. The processor 1110 is coupled to a memory, and is configured to execute instructions stored in the memory, to control the transceiver 1120 to send a signal and/or receive a signal.

Optionally, the communication device 1100 further includes a memory 1130, configured to store instructions.

In some embodiments, the processor 1110 and the memory 1130 may be integrated into one processing apparatus, and the processor 1110 is configured to execute program code stored in the memory 1130 to implement the foregoing function. During specific implementation, the memory 1130 may alternatively be integrated into the processor 1110, or may be independent of the processor 1110.

In some embodiments, the transceiver 1120 may include a receiver (or referred to as a receive machine) and a transmitter (or referred to as a transmit machine).

The transceiver 1120 may further include one or more antennas. The transceiver 1120 may alternatively be a communication interface or an interface circuit.

When the communication device 1100 is a chip, the chip includes a transceiver unit and a processing unit. The transceiver unit may be an input/output circuit or a communication interface. The processing unit may be a processor, a microprocessor, or an integrated circuit integrated on the chip.

In an implementation process, steps in the foregoing methods can be implemented by using a hardware integrated logic circuit in a processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor. To avoid repetition, details are not described herein again.

An embodiment of this application further provides a computer-readable storage medium. The computer-readable storage medium stores computer instructions for implementing the methods performed by the communication device in the foregoing method embodiments.

For example, when the computer program is executed by a computer, the computer can implement the methods performed by the communication device in the foregoing method embodiments.

For explanations and beneficial effects of related content of any one of the apparatuses provided above, refer to the corresponding method embodiments provided above. Details are not described herein again.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should further be noted that the memory described herein is intended to include, but is not limited to, these and any other suitable type of memory.

A person of ordinary skill in the art may be aware that units and algorithm steps in the examples described with reference to embodiments disclosed in this specification may be implemented by electronic hardware or a combination of computer software and electronic hardware. Whether the functions are implemented by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division into the units is merely logical function division, and there may be another division manner during actual implementation. For example, a plurality of units or components may be combined or integrated into another system, or a part of features may be ignored or not performed. In addition, the displayed or discussed mutual couplings or direct couplings or communication connections may be implemented through a part of interfaces. The indirect couplings or communication connections between the apparatuses or units may be implemented in an electronic form, a mechanical form, or another form.

The units described as separate components may or may not be physically separate, and components displayed as units may or may not be physical units. To be specific, the components may be located at one location, or may be distributed on a plurality of network units. A part or all of the units may be selected based on actual requirements to achieve the objectives of the solutions in embodiments.

In addition, all functional units in embodiments of this application may be integrated into one processing unit, or each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A Bluetooth connection method, comprising:
sending, by a first network device, a disconnection request message to a first terminal device when the first network device cannot access a server through a first link or when the first network device receives indication information sent by a second terminal device, wherein the disconnection request message is used to request to disconnect a Bluetooth low energy BLE communication connection between the first network device and the first terminal device, the first link is used to transmit information for the first terminal device to the server, the second terminal device is configured to control the first terminal device, and the indication information indicates to disconnect the BLE communication connection between the first network device and the first terminal device;
establishing, by a second network device, a BLE communication connection to the first terminal device; and
transmitting, by the second network device, information for the first terminal device to the server through a second link.

2. The method according to claim 1, wherein before the establishing, by the second network device, a BLE communication connection to the first terminal device, the method further comprises:
sending, by the first terminal device, a first Bluetooth broadcast, wherein the first Bluetooth broadcast indicates that the second network device is capable of being connected to the first terminal device; and
receiving, by the second network device, the first Bluetooth broadcast.

3. The method according to claim 1 or 2, wherein when the second network device establishes the BLE communication connection to the first terminal device, the method further comprises:
sending, by the first terminal device, a second Bluetooth broadcast, wherein the second Bluetooth broadcast indicates that the first terminal device is incapable of being connected.

4. The method according to any one of claims 1 to 3, wherein the first Bluetooth broadcast comprises a target field.

5. The method according to any one of claims 1 to 4, wherein the first terminal device is a door lock, and both the first network device and the second network device are Bluetooth gateways.

6. A Bluetooth connection method, comprising:
sending, by a second terminal device, a control message to a first terminal device, wherein the control message indicates to disconnect a Bluetooth low energy BLE communication connection of the first terminal device, and the second terminal device is configured to control the first terminal device;
sending, by the first terminal device, a disconnection request message to a first network device, wherein the disconnection request message is used to request to disconnect the BLE communication connection between the first terminal device and the first network device, and the first network device is configured to transmit information for the first terminal device to a server through a first link; and
establishing, by the second terminal device, a BLE communication connection to the first terminal device.

7. The method according to claim 6, wherein before the establishing, by the second terminal device, a BLE communication connection to the first terminal device, the method further comprises:
sending, by the first terminal device, a second Bluetooth broadcast, wherein the second Bluetooth broadcast indicates that the first network device is incapable of being connected to the first terminal device.

8. The method according to claim 7, wherein the sending, by the first terminal device, a second Bluetooth broadcast comprises: sending, by the first terminal device, the second Bluetooth broadcast within preset duration.

9. The method according to claim 7 or 8, wherein the second Bluetooth broadcast does not comprise a target field.

10. The method according to claim 6, wherein before the establishing, by the second terminal device, a BLE communication connection to the first terminal device, the method further comprises:
sending, by the first terminal device, a second Bluetooth broadcast, wherein the second Bluetooth broadcast comprises an identifier field, and the identifier field indicates that the first terminal device is incapable of being connected;
receiving, by the second terminal device, the second Bluetooth broadcast; and
ignoring, by the second terminal device, the identifier field.

11. The method according to any one of claims 6 to 10, wherein the method further comprises:
sending, by the first terminal device, a first Bluetooth broadcast when the BLE communication connection between the first terminal device and the second terminal device is disconnected, wherein the first Bluetooth broadcast indicates that the first network device is capable of being connected to the first terminal device.

12. The method according to any one of claims 6 to 11, wherein the first terminal device is a door lock, the second terminal device is a mobile phone, and the first network device is a Bluetooth gateway.

13. A communication system, comprising a first network device, a second network device, and a first terminal device, wherein the first network device is configured to perform a method performed by the first network device in the method according to any one of claims 1 to 5, the second network device is configured to perform a method performed by the second network device in the method according to any one of claims 1 to 5, and the first terminal device is configured to perform a method performed by the first terminal device in the method according to any one of claims 1 to 5.

14. A communication system, comprising a first network device, a first terminal device, and a second terminal device, wherein the first network device is configured to perform a method performed by the first network device in the method according to any one of claims 6 to 12, the first terminal device is configured to perform a method performed by the first terminal device in the method according to any one of claims 6 to 12, and the second terminal device is configured to perform a method performed by the second terminal device in the method according to any one of claims 6 to 12.

15. A communication apparatus, comprising a module configured to implement the method according to any one of claims 1 to 5 or a module configured to implement the method according to any one of claims 6 to 12.

16. A computer-readable storage medium, wherein the computer-readable storage medium stores a computer program, and when the computer program is executed by a computer, the method according to any one of claims 1 to 5 or the method according to any one of claims 6 to 12 is implemented.

17. A computer program product, wherein the computer program product comprises computer program code, and when the computer program code is run on a computer, the method according to any one of claims 1 to 5 or the method according to any one of claims 6 to 12 is performed.

18. A chip product, comprising a processor, configured to read instructions stored in a memory, wherein when the processor executes the instructions, the chip is enabled to implement the method according to any one of claims 1 to 5 or the method according to any one of claims 6 to 12.
